# EUROPEAN PATENT APPLICATION

(11) **EP 1 605 407 A1**
(43) Date of publication of application: **14.12.2005**
(21) Application number: 04714959.6
(22) Date of filing: 26.02.2004
(51) Int. Cl.: G06T 7/60

(54) **IMAGE PROCESSING DEVICE**

(30) Priority: 04.03.2003 JP 2003056460
(71) Applicant: MATSUSHITA ELECTRIC INDUSTRIAL CO., LTD., Kadoma-shi, Osaka 571-8501 (JP)
(72) Inventor: KUROKAWA, Hideyuki, Osaka (JP)
(74) Representative: Grünecker, Kinkeldey, Stockmair & Schwanhäusser Anwaltssozietät
(86) International application number: PCT/JP2004/002322
(87) International publication number: WO 2004/079660

(57) **Abstract**

The present invention provides an image processing apparatus capable of counting objects to be counted with high accuracy. In the image processing apparatus of the present invention, a feature image generating unit (2) provided upstream of a binarizing unit (3) applies spatial filtering to a monochrome picture for emphasizing a brightness value peak portion (S-shaped pattern) in the region of an object to be counted, according to the size of the image of the object to be counted.

## Description

### Technical Field

The present invention relates to an image processing apparatus for extracting brightness value patterns indicating the presence of images of objects to be counted from a monochrome picture containing the objects each having a particular size and comprising light and dark portions, and for counting the objects to be counted.

### Background Art

The present invention relates to an apparatus for counting, for example, cells (objects, such as blood cells, to be counted) of a particular size among cells of various sizes in a specimen injected in an analyzer disc.

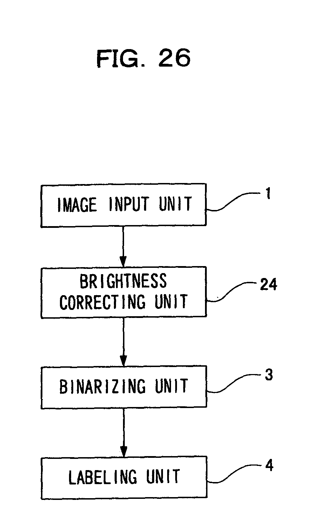

A conventional image processing apparatus which counts the number of images of objects to be counted will be described below with reference to FIG. 26. FIG. 26 is a block diagram showing a configuration of a conventional image processing apparatus.

In FIG. 26, an image input unit 1 reads a picture containing the images of objects to be counted and inputs image data (a monochrome picture) resulting from digitization of the brightness of the pixels constituting the picture in a brightness correcting unit 24.

The brightness correcting unit 24 corrects the brightness of the image data (monochrome picture) inputted from the image input unit 1 by subtracting a background brightness value from the brightness value of each pixel. The average of the brightness values of pixels neighboring each pixel (for example 3 x 3 pixels centered at a pixel) is used as the background brightness value.

A binarizing unit 3 applies thresholding to the image data (monochrome picture) which underwent the brightness correction by the brightness correcting unit 24 with a predetermined threshold to generate a binary picture. The thresholding is a process in which the brightness values of pixels are compared with a predetermined threshold and the brightness values of pixels that are greater than the predetermined threshold are converted to 1s and the brightness values of pixels that are smaller than the predetermined threshold are converted to 0s. Pixels having the brightness value 1 will be hereinafter referred to as white pixels and pixels having the brightness value 0 will be referred to as black pixels. The threshold is set such that pixels making up object to be counted in brightness-corrected data (a monochrome picture) will be converted to white pixels.

The labeling unit 4 labels the white pixels that make up a connected component representing an object to be counted with an identical number (label). This labeling enables identification of the positions of objects to be counted, which makes it possible to count the objects. Diffused light can generate pseudo white pixels around white pixels representing an object to be counted. Conventional image processing apparatuses count a connected white pixel component and another connected white pixel component contiguous to it as one connected component.

Thus, the conventional image processing apparatuses extract a brightness value pattern that indicate the presence of the image of an obj ect to be counted from a monochrome pictures containing the objects to be counted and count the images of the objects to be counted (for example see Domestic Republication of PCT Publication No. 00/039329).

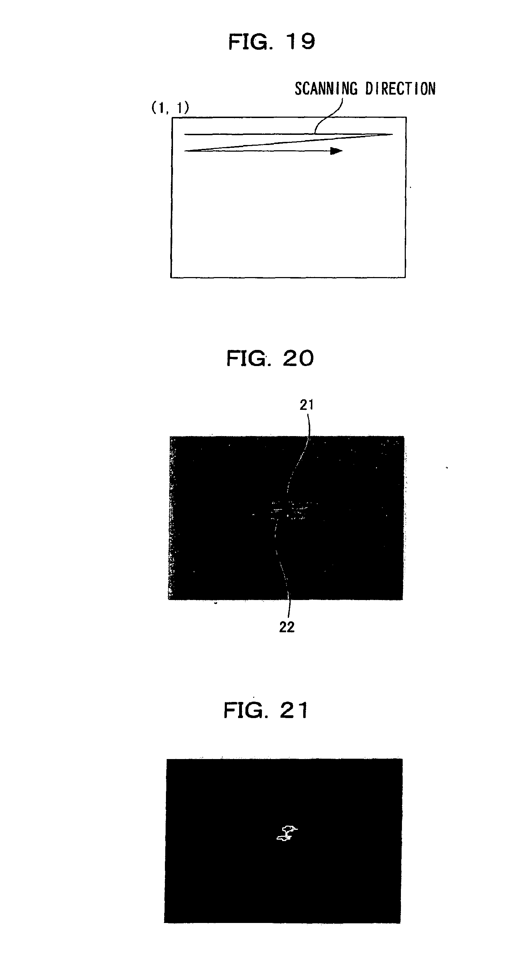

However, the conventional image processing apparatuses have the following four problems.
1. If a monochrome picture contains images of objects not to be counted (trashes), connected components comprised of white pixels that represent the trashes will appear in its binary picture and the trashes will be also counted, thereby degrading the accuracy of the counting.
2. If horizontal displacements occur in a monochrome picture as shown in FIG. 12, more than one (S-shaped pattern) appears in the brightness values in the region occupied by the image of an object to be counted as shown in FIG. 14. Because conventional image processing apparatuses applies thresholding to a monochrome picture to extract a peak portion (S-shaped pattern peak portion) in the region occupied by the image of an object to be counted to generate a binary image, the image of a single object to be counted appears as multiple connected components in the binary mage as shown in FIG. 16. The conventional image processing apparatuses count these multiple components as the images of different objects, thereby degrading the accuracy of the counting. Such image displacements are caused if image input units read an image line by line in a given direction.
3. If the images of objects to be counted are close to each other as shown in FIG. 20, the images of the adjacent objects can appear as one connected components in a binary image as shown in FIG. 21, depending on the threshold used for generating the binary image. However, because conventional image processing apparatuses assign an identical label to the pixels in one connected component, they can miscount the actually multiple objects to be counted as one object, thereby degrading the accuracy of the counting.
4. In conventional image processing apparatus, a brightness correcting unit, a binarizing unit, and a labeling unit perform their processing on all pixels making up an inputted monochrome picture, which consume a large amount of time.

### Disclosure of the Invention

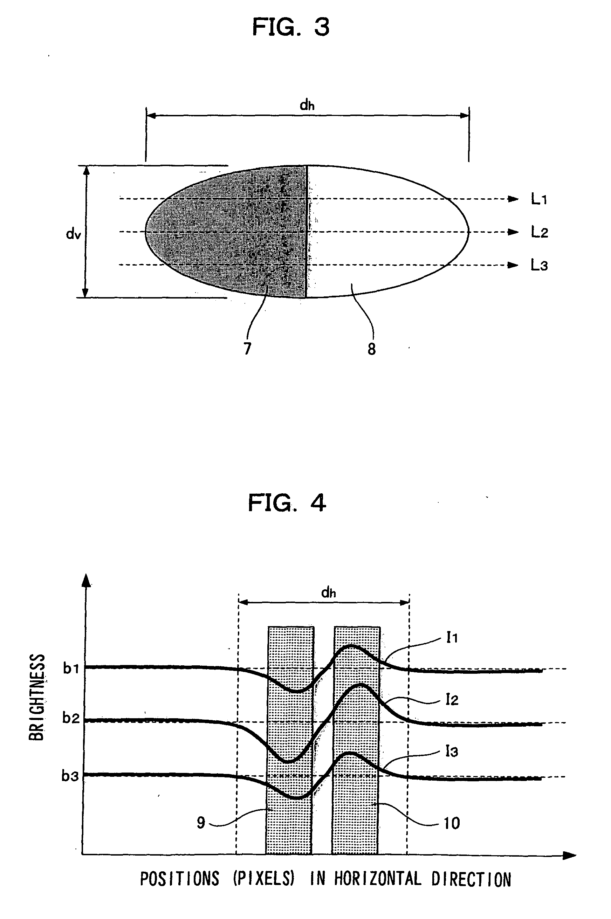

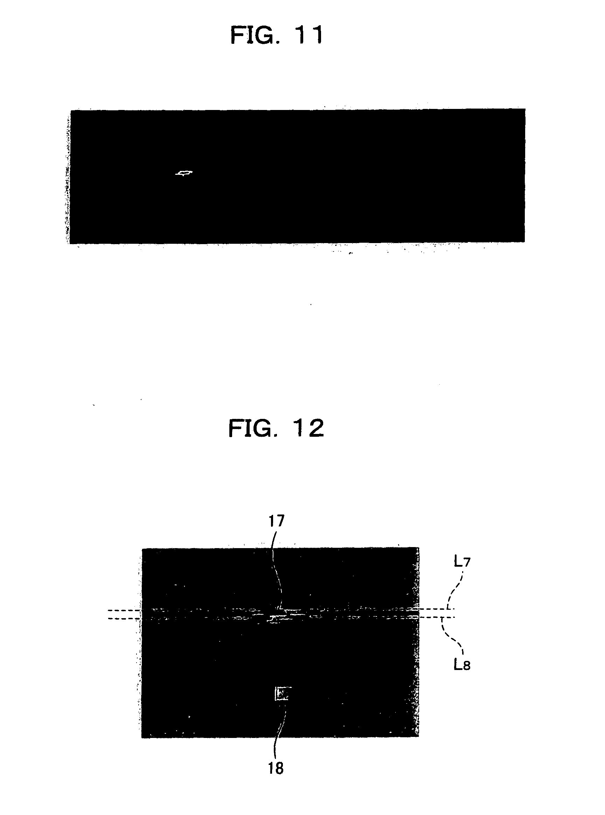

In light of the first to fourth problems described above, an object of the present invention is to provide an image processing apparatus described below.
(1) In light of the first problem, an obj ect of the present invention is to provided an image processing apparatus capable of applying spatial filtering to a monochrome picture to emphasize a peak portion (S-shaped pattern) of brightness values in the area of the image of an object to be counted, thereby generating a binary image in which a connected component representing an object not to be counted (trash) does not appear and enabling accurate counting of objects to be counted even if the monochrome picture contains the images of trashes.
   Another object of the present invention is to provide an image processing apparatus which performs spatial filtering for emphasizing a peak portion of brightness values in the area of the image of an object to be counted as described below.
   First spatial filtering utilizes the fact that the brightness values in the area of an object to be counted have a strong correlation with each other in the vertical direction of the image of the object to be counted. Thus, an object of the present invention is to provide an image processing apparatus performs spatial filtering to emphasize a peak portion (S-shaped pattern) in brightness values in the area of the image of an obj ect to be counted by adding up the brightness values of all pixels between two pixels located above and below a pixel of interest (a current pixel being processed) at a predetermined distance from the pixel of interest that is based on the size of the image of the object to be counted, in the vertical direction of the image of the object to be counted, and using the sum as the brightness value of the pixel of interest. This spatial filtering enlarges the peak (S-shaped pattern) in the area of the image of the object to be counted. On the other hand, the spatial filtering does not enlarges brightness values (patterns) in trash areas because the brightness values in the trash areas do not have such a correlation and the area in which the brightness values are added up is based on the size of the image of the object to be counted. Therefore, by performing thresholding to extract the new peak (S-shaped pattern) in the area of the image of the object to be counted, a binary image that does not contain trash images can be generated.
   Second spatial filtering utilizes the fact that light and dark portions appear in the area of the image of an object to be counted on the left-hand and right-hand part of the image of the object (see FIG. 3). That is, an object of the present invention is to provide an image processing apparatus which performs spatial filtering to emphasize a peak portion (S-shaped pattern) in the area of the image of an object to be counted, in which the difference between the brightness values of two pixels at a predetermined distance from a pixel of interest that is based on the size of the image of the object to be counted is calculated and the brightness value of the pixel of interest is replaced with the difference. This spatial filtering increases brightness values around the boundary between the light and dark parts, which appears as a new peak portion. On the other hand, this spatial filtering does not increase the brightness values in the area of the image of a trash because light and dark parts as in the image of the object to be counted do not appear in the trash image and the predetermined distance is based on the size of the image of the object to be counted. Therefore, by performing thresholding to extract the new peak of the brightness values in the area of the image of the object to be counted, a binary image that does not contain the image of the trash can be generated.
(2) In light of the second problem described earlier, an object of the present invention is to provide an image processing apparatus which applies spatial filtering (a feature image generating process) to a monochrome picture in which multiple peak portions of brightness values that appear in the area of the image of an object to be counted, on the basis of the size of the image of the object to be counted, thereby enabling a binary image in which the image of one object to be counted appear as a single connected component to be generated even if a horizontal displacement occurs in the monochrome picture as shown in FIG. 12, and thus enabling accurate counting of objects to be counted.
   Another object of the present invention is to provide an image processing apparatus which performs spatial filtering which utilizes the fact that light and dark parts appears in the left-hand and right-hand parts of in the area of the image of an object to be counted to cause multiple peaks of brightness values that appear in the area of the image of the object to overlap each other.
   That is, an object of the present invention is to provide an image processing apparatus which performs spatial filtering in which two sub areas are set at a predetermined distance from a pixel of interest in the horizontal direction of the image of an object to be counted, the smallest value among the brightness values in one sub area is subtracted from the largest value among the brightness values in the other sub area and the brightness value of the pixel of interest is replaced with the difference, thereby causing multiple peaks of brightness values that appear in the area of the image of the object to overlap each other. This spatial filtering causes the brightness value of the pixel of interest to appear as a new peak resulting from the overlapping of the two sub areas with the light and dark areas, respectively. Accordingly, the width of the peak is broad. Consequently, even if a horizontal displacement occurs in a monochrome picture as shown in FIG. 12 and multiple peak portions (S-shapedpatterns) of brightness values appear in the area of the image of an object to be counted, the area of the overlap of the new peak with the peak portions will be large and accordingly the maximum brightness value in this overlapping area will be large. Thus, a binary image in which the multiple peak portions appear as a single connected component can be generated.
(3) In light of the third problem describe earlier, an obj ect of the present invention is to provide an image processing apparatus which limits a search range for labeling according to the size of the image of image and assigns an identical number only to the pixels in a connected component in the search range, thereby allowing accurate counting of objects even if the images of multiple neighboring objects appear as a single connected components.
(4) In light of the fourth problem described earlier, an object of the present invention is to provide an image processing apparatus in which an area extracting unit for extracting a sub image containing a non-background image (the image of an object to be counted) from a monochrome picture is provided downstream of an image input unit, and the sub image is used in a feature image generating process, a binarizing process, and a labeling process to reduce the processing time.

According to claim 1 of the present invention, there is provided an image processing apparatus including: an image input unit for inputting a monochrome picture containing at least one image of an object to be counted, the image having a predetermined size and comprising a light portion and a dark portion; a feature image generating unit for generating a feature image in which the brightness value of the image of the object to be counted is emphasized by applying, to the monochrome picture, spatial filtering based on the size of the image of the object to be counted; and a binary image generating unit for generating a binary image by applying thresholding to the feature image by using a predetermined threshold, wherein labeling is applied to the binary image to assign an identical label to the elements of a connected component representing the image of the object to be counted and the images of the objects to be counted are counted.

According to claim 2 of the present invention, the feature image generating unit of the image processing apparatus as set forth in the claim 1 performs spatial filtering in which the brightness values of all pixels on a line segment between end points which are two pixels located at a predetermined distance from the pixel of interest below and above, in the vertical direction of the image of the object to be counted, are added up and the brightness value of the pixel of interest is replaced with the sum, the predetermined distance being determined based on the size of the image of the object to be counted.

According to claim 3 of the present invention, there is provided the image processing apparatus as set forth in claim 2, wherein the predetermined distance is equal to one half of the maximum vertical width of the image of the object to be counted.

According to claim 4 of the present invention, there is provided the image processing apparatus as set forth in claim 2, wherein the predetermined distance is equal to one quarter of the vertical width of the image of the object to be counted.

According to claim 5 of the present invention, there is provided the image processing apparatus as set forth in claim 1, wherein the feature image generating unit reads the brightness values of two pixels located at a predetermined distance from the pixel of interest, in the left and right horizontal directions of the image of the object to be counted, subtracts the brightness value of one of the pixels that is in the dark portion of the image of the object to be counted from the brightness value of the other pixel that is in the light portion of the image of the object to be counted and, replaces the brightness value of the pixel of interest with the difference, the predetermined distance being determined based on the size of the object to be counted.

According to claim 6 of the present invention, there is provided the image processing apparatus as set forth in claim 5, wherein the predetermined distance is equal to one half of the maximum horizontal width of the image of the object to be counted.

According to claim 7 of the present invention, there is provided the image processing apparatus as set forth in claim 5, wherein the predetermined distance is equal to one-third of the maximum horizontal width of the image of the object to be counted.

According to claim 8 of the present invention, there is provided an image processing apparatus including: an image input unit for inputting a monochrome picture containing at least one image of an object to be counted, the image having a predetermined size and comprising a light portion and a dark portion; a feature image generating unit for generating a feature image in the which of a peak portion of the brightness value of the image of the object to be counted is increased by applying, to the monochrome picture, spatial filtering based on the size of the image of the object to be counted; and a binary image generating unit for generating a binary image by applying thresholding to the feature image by using a predetermined threshold, wherein labeling is applied to the binary image to assign an identical label to the elements of a connected component representing the image of the object to be counted and the images of the objects to be counted are counted.

According to claim 9 of the present invention, there is provided the image processing apparatus as set forth in claim 8, wherein the feature image generating unit sets, as first and second pixels, two pixels located at a first distance from the pixel of interest, in the left and right horizontal directions of the object to be counted, sets a first sub area centered at the first pixel and a second sub area centered on the second pixel, subtracts the brightness value of the pixel that has the lowest brightness value among the pixels in the sub area in the dark portion of the image of the object to be counted, from the brightness value of the pixel that has the highest brightness value among the pixels in the sub area in the light portion, and replaces the brightness value of the pixel of interest with the difference.

According to claim 10 of the present invention, there is provide the image processing apparatus as set forth in claim 9, wherein the first sub area is comprised of pixels on a line segment between two pixels located at a second predetermined distance from the first pixel, in the left and right horizontal directions of the image of the object to be counted, and the second sub area is comprised of pixels on a line segment between two pixels located at a second predetermined distance from the second pixel in the left and right horizontal directions of the image of the object to be counted.

According to claim 11 of the present invention, there is provided the image processing apparatus as set forth in claim 9, wherein the first predetermined distance is equal to one half of the maximum horizontal width of the image of the object to be counted.

According to claim 12 of the present invention, there is provided the image processing apparatus as set forth in claim 10, wherein the first predetermined distance is equal to one half of the maximum horizontal width of the object to be counted.

According to claim 13 of the present invention, there is provided the image processing apparatus as set forth in claim 9, wherein the first predetermined distance is equal to one-third of the maximum horizontal width of the image of the object to be counted.

According to claim 14 of the present invention, there is provided the image processing apparatus as set forth in claim 10, wherein the first predetermined distance is equal to one-third of the maximum horizontal width of the image of the object to be counted.

According to claim 15 of the present invention, there is provided the image processing apparatus as set forth in claim 10, wherein the second predetermined distance is equal to one-tenth of the maximum horizontal width of the image of the object to be counted.

According to claim 16 of the resent invention, there is provided the image processing apparatus as set forth in claim 11, wherein the second predetermined distance is equal to one-tenth of the maximum horizontal width of the image of the object to be counted.

According to claim 17 of the present invention, there is provided the image processing apparatus as set forth in claim 12, wherein the second predetermined distance is equal to one-tenth of the maximum horizontal width of the image of the object to be counted.

According to claim 18 of the present invention, there is provided the image processing apparatus as set forth in claim 13, wherein the second distance is equal to one-tenth of the maximum horizontal width of the image of the obj ect to be counted.

According to claim 19 of the present invention, there is provided the image processing apparatus as set forth in claim 14, wherein the second predetermined distance is equal to one-tenth of the maximum horizontal width of the image of the object to be counted.

According to claim 20 of the present invention, there is provided the image processing apparatus as set forth in any of claims 1 to 19, wherein the binary image is searched for a connected component representing the image of the object to be counted in a limited search range based on the size of the image of the object to be counted, and labeling is applied to the limited search range to assign an identical label to the elements of the connected component.

According to claim 21 of the present invention, there is provided the image processing apparatus as set forth in claim 20, wherein the limited search range is of a size such that at least the image of the object to be counted is inscribed in the limited search range.

According to claim 22 of the present invention, there is provided the image processing apparatus as set forth in any of claims 1 to 19, wherein an area extracting unit for extracting an image of an area containing the image of the object to be counted from the monochrome picture to generate a sub image is provided downstream of the image input unit and the feature image generating unit applies the spatial filtering to the sub image.

According to claim 23 of the present invention, there is provided the image processing apparatus as set forth in claim 22, wherein the area extracting unit determines whether or not the pixel of interest is in an image processing range set for another pixel when an absolute value of the difference between the brightness value of the pixel of interest and the brightness value of the background is greater than a predetermined value, and if the pixel of interest is in the image processing range set for another pixel, the area extracting unit sets an image processing range based on the pixel of interest and extracts an area image of the set image processing range.

According to claim 24 of the present invention, there is provided the image processing apparatus as set forth in claim 23, wherein if the image processing range set for the pixel of interest overlaps a part or all of the image processing range set for another pixel, the area extracting unit replaces the image processing ranges with one image processing range encompassing the image processing ranges in their entirety, and extracts an area image of the replacement image processing range.

According to claim 25 of the present invention, there is provided the image processing apparatus as set forth in claim 24, wherein the replacement image processing range contains the pixel of interest, and is of a size such that at least the image of the object to be counted is inscribed therein.

According to claim 26 of the present invention, there is provided the image processing apparatus as set forth in claim 24, wherein the binary image is searched for a connected component representing the image of the object to be counted, in a limited search range based on the size of the image of the object to be counted, and labeling is applied to the limited search range to assign an identical label to the elements of the connected component.

According to claim 27 of the present invention, there is provided the image processing apparatus as set forth in claim 26, wherein the limited search range is of a size such that at least the image of the object to be counted is inscribed in the limited search range.

According to the present invention, spatial filtering for emphasizing a peak portion (S-shaped pattern) of the brightness value in a region occupied by the image of an object to be counted is performed according to the size of the image of the object to be counted, as has been described above. Thus, even if a monochrome picture contains objects (trashes) that should not be counted, a binary image in which the connected components representing the trashes do not appear can be generated and consequently the objects to be counted can be counted accurately.

Furthermore, because spatial filtering is applied to a monochrome picture to cause the peak portions of brightness values appearing in the region occupied by the image of an object to be counted to overlap each other according to the size of the image of the object, a binary image in which the image of one object appears as one connected component can be generated even if there is a horizontal displacement in the monochrome picture, and consequently the object to be counted can be counted accurately.

Moreover, because a search range for labeling is limited according to the size of the image of an object to be counted, an identical label can be assigned only to the pixels in the portion of the component that is included in the search range limited according to the size of the object to be counted and consequently the obj ect to be counted can be counted accurately.

Furthermore, because the area extracting unit is provided downstream of the image input unit for extracting an area containing a non-background object (an area containing the image of an object to be counted) from a monochrome picture to generate a sub image and the sub image of the monochrome picture is used in the feature image generating process, binarizing process, and labeling process, the time required for these processes can be reduced.

### Brief Description of the Drawings

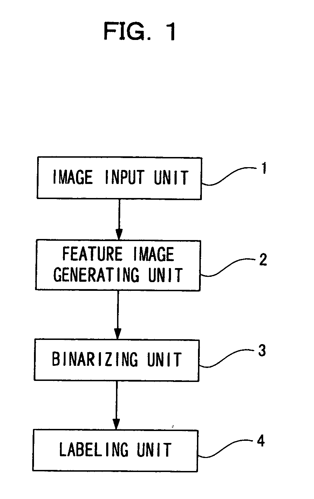

FIG. 1 is a block diagram showing a configuration of an image processing apparatus according to a first embodiment of the present invention;

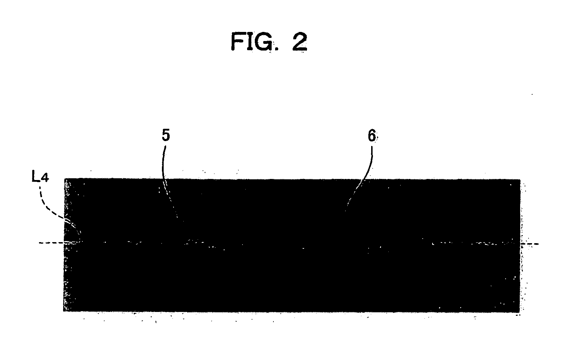

FIG. 2 shows an example of a monochrome picture in the first embodiment of the present invention;
FIG. 3 is a schematic diagram illustrating an image of an object to be counted in the first embodiment of the present invention;
FIG. 4 is a graph showing changes in brightness and the correlation between adjacent lines in the horizontal direction of an object to be counted in the first embodiment of the present invention;

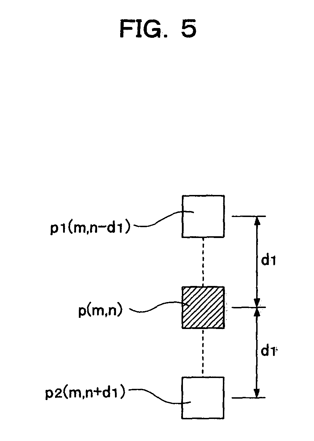

FIG. 5 is a schematic diagram illustrating a feature image generating process according to the first embodiment of the present invention;

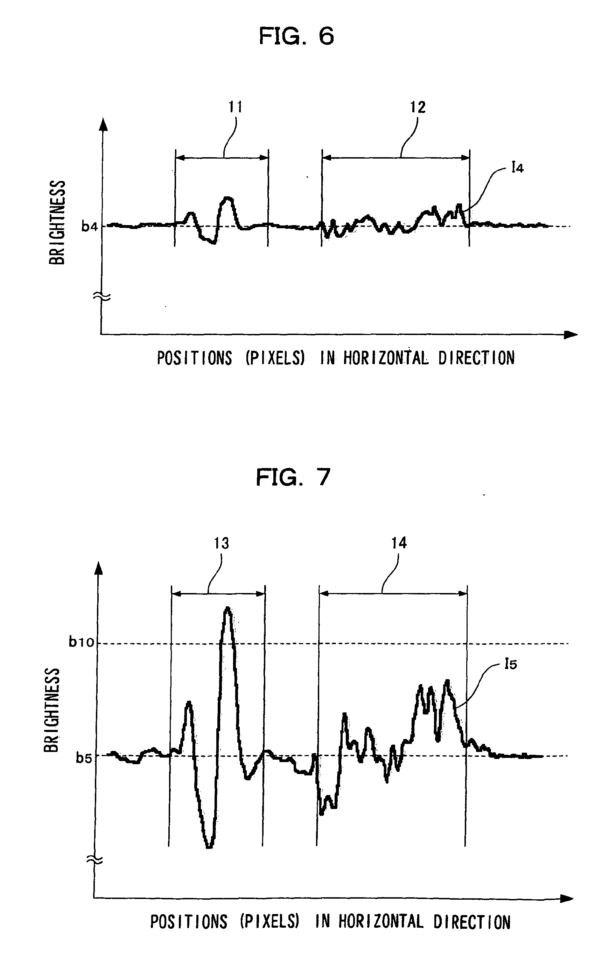

FIG. 6 is a graph of changes in brightness of a monochrome picture in the horizontal direction in the first embodiment of the present invention;
FIG. 7 is a graph of changes in brightness of a feature image in the horizontal direction in the first embodiment of the present invention;

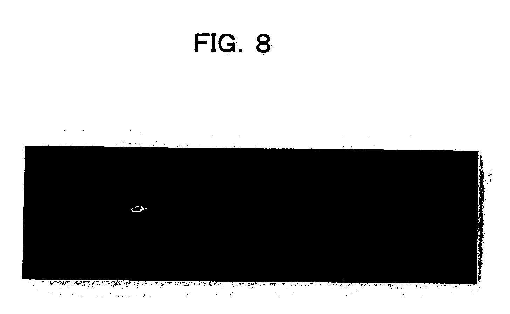

FIG. 8 shows an example of a binary image generated from a feature image according to the first embodiment of the present invention;

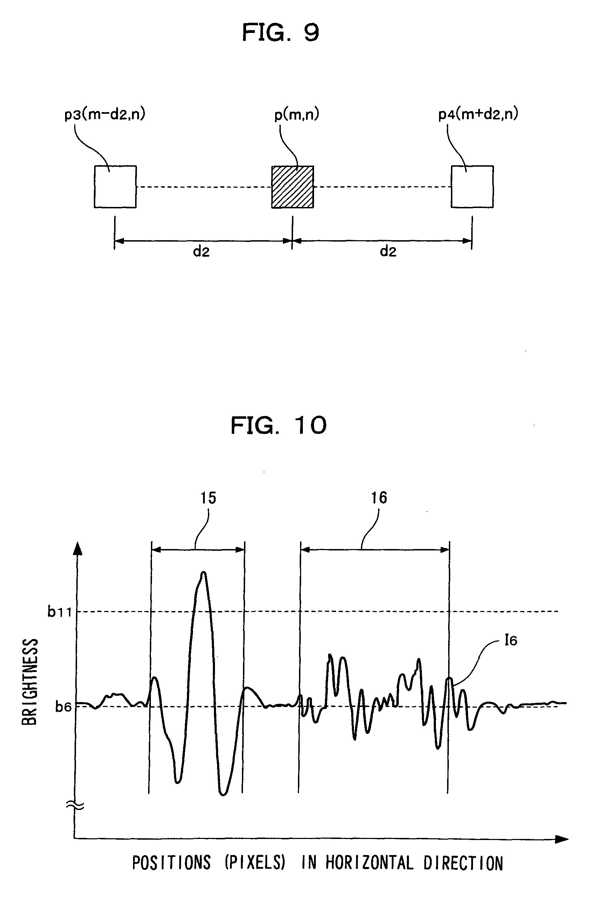

FIG. 9 is a schematic diagram illustrating a feature image generating process according to a second embodiment of the present invention;
FIG. 10 is a graph of changes in brightness of a feature image in the horizontal direction in the second embodiment of the present invention;
FIG. 11 shows an example of a binary image generated from a feature image according to the second embodiment of the present invention;
FIG. 12 shows an example of a monochrome picture in a third embodiment of the present invention;

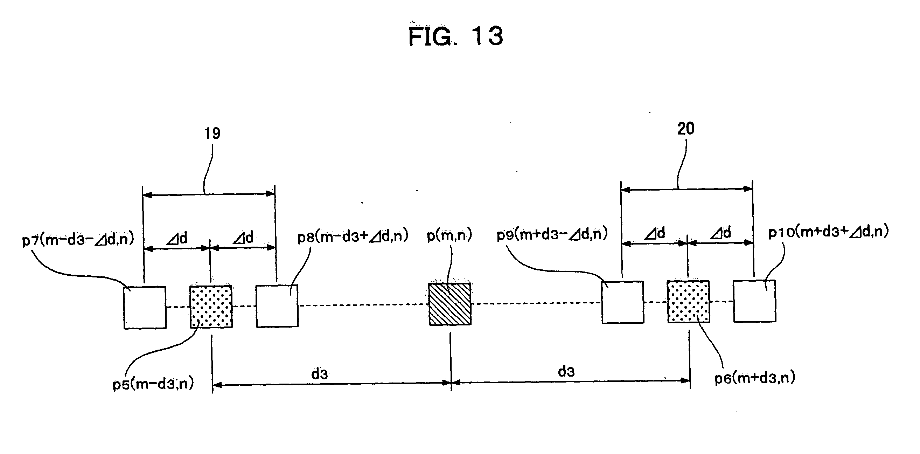

FIG. 13 is a schematic diagram illustrating a feature image generating process according to the third embodiment of the present invention;

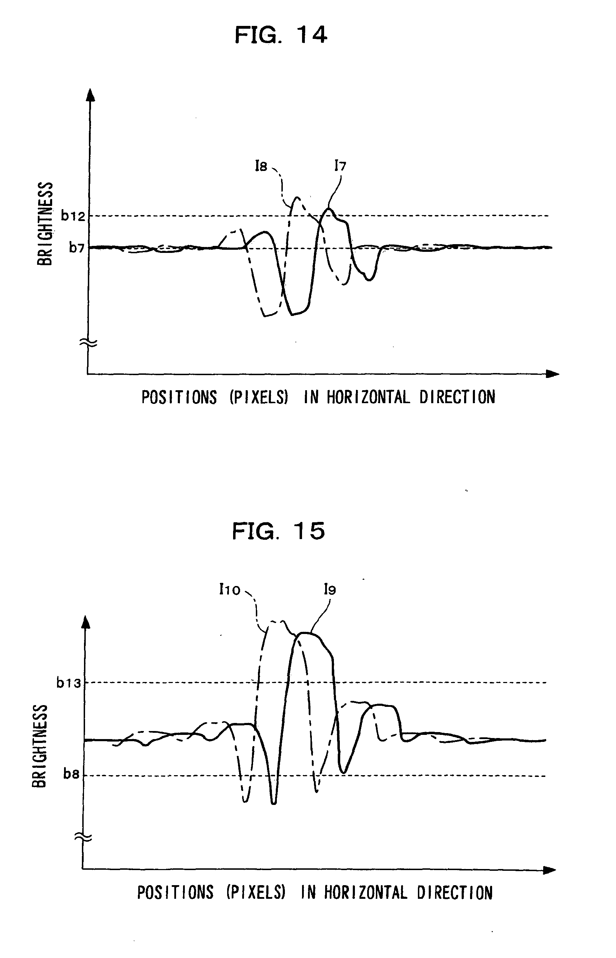

FIG. 14 is a graph of changes in brightness of a monochrome picture in the horizontal direction in the third embodiment of the present invention;
FIG. 15 is a graph of changes in brightness of a feature image in the horizontal direction in the third embodiment of the present invention;

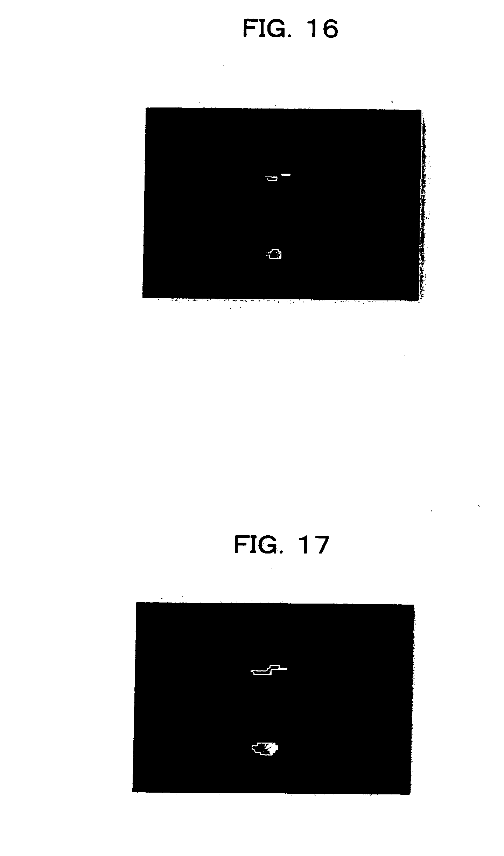

FIG. 16 shows an example of a binary image generated from a monochrome picture according to the third embodiment of the present invention;
FIG. 17 shows an example of a binary image generated from a feature image according to the third embodiment of the present invention;

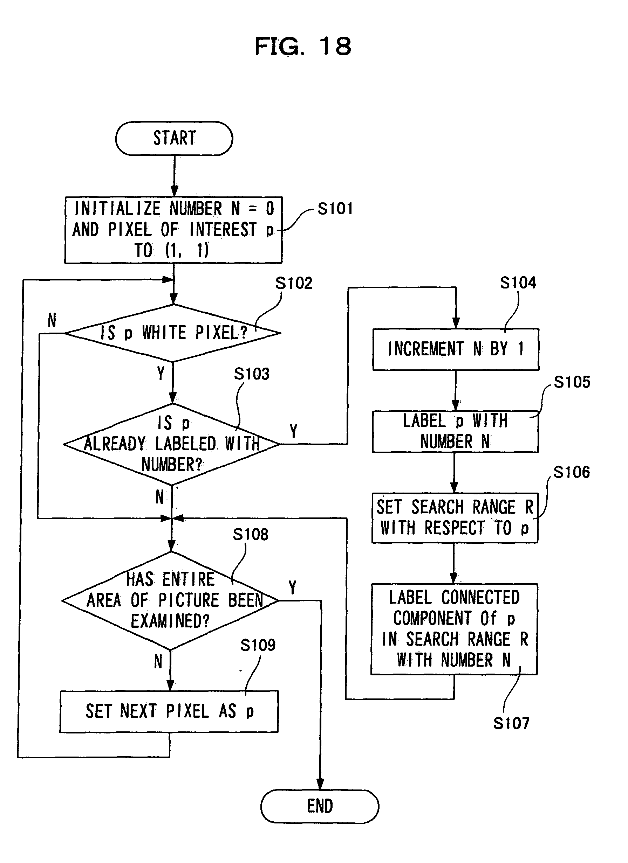

FIG. 18 is a flowchart illustrating a labeling process according to a fourth embodiment of the present invention;
FIG. 19 is a diagram for explaining a coordinate system for an image according to the fourth embodiment of the present invention;
FIG. 20 shows an example of a monochrome picture in the fourth embodiment of the present invention;
FIG. 21 shows an example of a binary image in the fourth embodiment of the present invention;

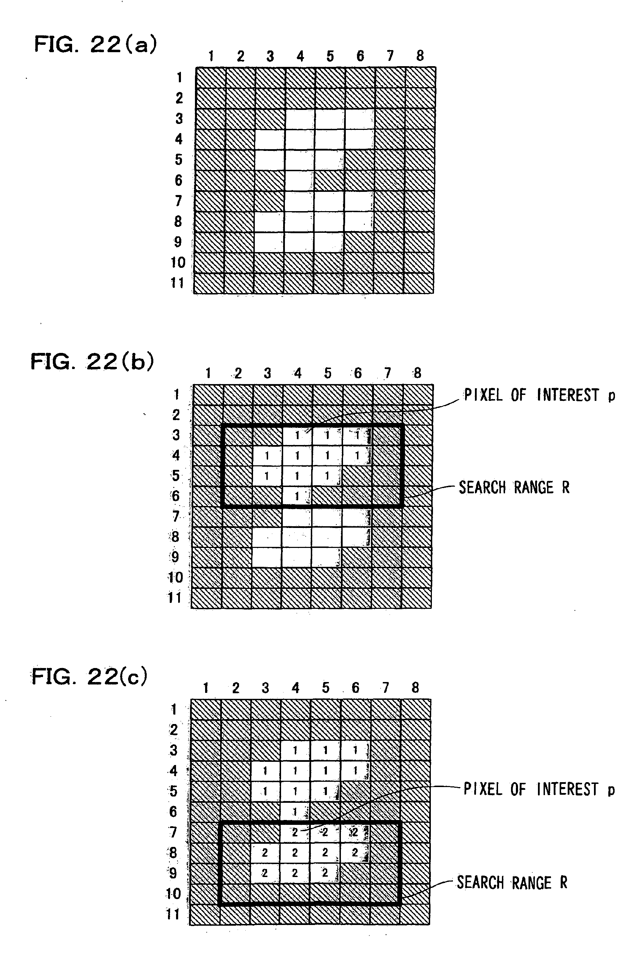

FIG. 22 is a schematic diagram illustrating a labeling process according to the fourth embodiment of the present invention;

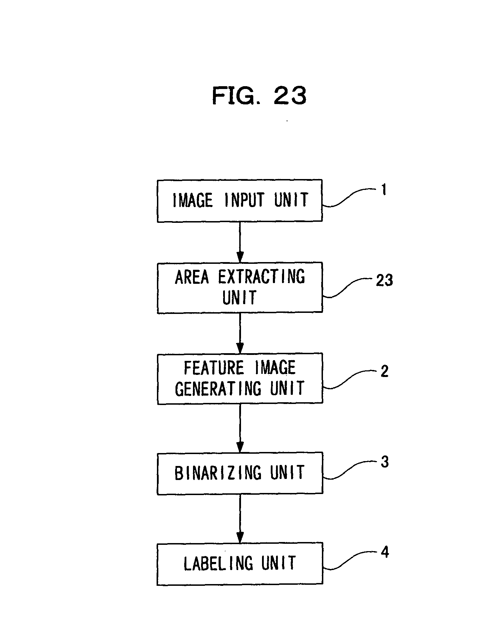

FIG. 23 is a block diagram showing a configuration of an image processing apparatus according to a fifth embodiment of the present invention;

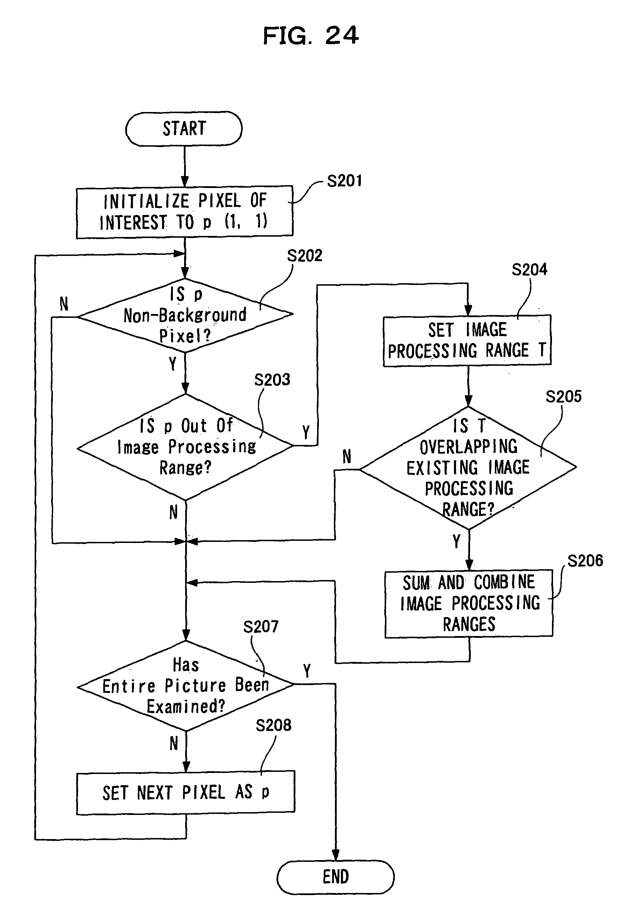

FIG. 24 is a flowchart of a process for obtaining an area for image processing according to the fifth embodiment of the present invention;

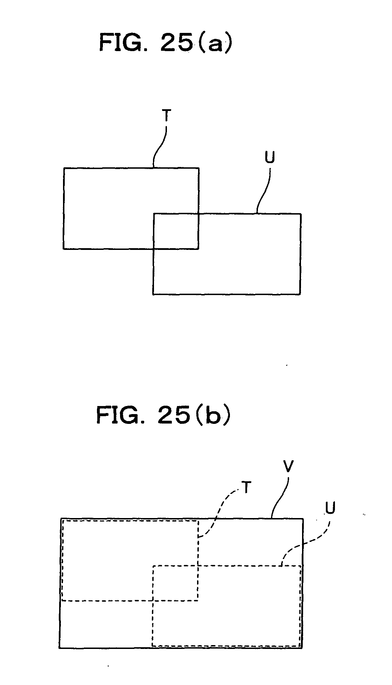

FIG. 25 is a diagram for explaining a method for combining areas for image processing according to the fifth embodiment of the present invention; and
FIG. 26 is a block diagram showing a configuration of a conventional image processing apparatus.

### Best Mode for Carrying Out the Invention

Embodiments of the present invention will be described below in detail with reference to the accompanying drawings. It should be noted that the embodiments described herein are illustrative only and the present invention is not limited to the embodiments described below.

### First embodiment

FIG. 1 is a block diagram showing a configuration of an image processing apparatus according to a first embodiment of the present invention.

An image input unit 1 in FIG. 1 reads a picture containing images of objects to be counted having a certain size and inputs image data (a monochrome picture) resulting from digitization of the brightness of the pixels making up the picture into a feature image generating unit 2.

The feature image generating unit 2 applies spatial filtering (hereinafter referred to as the feature image generating process) to the monochrome picture inputted from the image input unit 1 by following a procedure, which will be described later, according to the size of objects to be counted to generate a feature image, and inputs it into a binarizing unit 3.

The binarizing unit 3 applies thresholding to the feature image inputted from the feature image generating unit 2 by using a predetermined threshold to generate a binary image and inputs it into a labeling unit 4.

The labeling unit 4 performs labeling on the binary image inputted form the binarizing unit 3 to assign an identical number (label) to the pixels in each white pixel connected component representing an object to be counted. This labeling make it possible to identify the positions of objects to be counted and therefore to count the objects to be counted.

A feature image generating process according to the first embodiment will be described below with reference to FIGS. 2 to 8.

FIG. 2 shows an example of a monochrome picture (input picture) inputted from the image input unit 1 to the feature image generating unit 2. What are to be counted in FIG. 2 are the images 5 of objects to be counted. In addition to these images, there are the images 6 of trashes not to be counted in FIG. 2.

FIG. 3 is a schematic diagram for explaining an image 5 of an object to be counted. As shown in FIG. 3, the image 5 of the object to be counted has a maximum horizontal (side-to-side) width of dₕ pixels in and a maximum vertical (top-to-bottom) width of dᵥ pixels, and has a dark, left-hand portion 7 with a low brightness value and a light, right-hand portion 8 with a high brightness value. It is assumed in the following description that the vertical and horizontal directions of objects to be counted correspond to the vertical and horizontal directions, respectively, of the input picture.

FIG. 4 is a graph showing changes in brightness of objects to be counted in the horizontal direction. The horizontal axis represents positions of the image in the horizontal direction and vertical axis represents the brightness values. Curves I₁, I₂, and I₃ represent lines L₁, L₂, and L₃, respectively, shown in FIG. 3. Although b₁, b₂, and b₃ represent the identical background brightness value, they are depicted in a stack so that correlations among curves I₁, I₂, and I₃ can be seen.

As shown in FIG. 4, S-curves having the minimum portion (bottom 9) and the maximum portion (peak 10) appear on curves I₁, I₂, and I₃ in a range of about dₕ pixels along the horizontal axis, that is, in the region occupied by the image of the object to be counted. As mentioned above, b₁, b₂, and b₃ actually represent the same brightness value, therefore the brightness values in the region occupied by the object to be counted have a strong correlation with one another in the vertical direction of the obj ect to be counted. In contrast, the correlation among the brightness values in other areas is weak.

FIG. 5 is a schematic diagram for explaining a feature image generating process according to the first embodiment. In the feature image generating process according to the first embodiment, two pixels p₁ (m, n - d₁) and p₂ (m, n + d₁) are set above and below a pixel of interest p (m, n) at a predetermined distance (d₁ pixels) from the pixel p as shown in FIG. 5. The brightness values of all pixels between pixels p₁ and p₂ are added together, and the brightness value of the pixel P of interest is replaced with that sum. This process is performed on all pixels in the input picture. As a result of this feature image generating process, a feature image is generated.

The predetermined distance of d₁ pixels is determined on the basis of the size of the image of the object to be counted. In this example, the distance is half of the maximum vertical width of the image of the object to be counted, i.e., (dᵥ/2) pixels.

FIG. 6 shows a graph of changes in brightness in the horizontal direction of the input picture shown in FIG. 2, in which the horizontal axis represents the positions in the input picture in the horizontal direction and the vertical axis represents the brightness values. Curve I₄ represents the brightness values of the pixels on line L₄. Curve b₄ represents background brightness values.

FIG. 7 shows a graph of changes in the brightness in the horizontal direction of a feature image generated by the feature image generating process described above. The horizontal axis represents the positions in the feature image in the horizontal direction and the vertical axis represent the brightness values. Curve I₅ represents the brightness values of the pixels on line L₅ (not shown) in the feature image. Line L₅ corresponds to line L₄ in the input picture shown in FIG. 2. Curve b₅ represents background brightness values.

As shown in FIGS. 6 and 7, the S-shaped pattern 11 is not so distinctive from the trash patterns 12 in the input picture (monochrome picture) whereas a new S-shaped pattern 13 appears emphasized relative to new trash patterns 14. This is because the brightness values in the region occupied by the object to be counted are in a strong correlation with each other in the vertical direction of the object to be counted as described above, and accordingly the brightness values in the region occupied by the image of the object to be counted (the S-shaped pattern) are emphasized when the brightness values in the vertical direction in the region based on the maximum vertical width of the object to be counted are added up. In contrast, the correlation between brightness values in the other region is weak and the region in which the brightness values are added together is based on the size of the object to be counted. Therefore, the brightness values in the region occupied by the image of a trash (trash pattern) are not emphasized.

FIG. 8 shows a binary image generated by applying thresholding to the feature image by using a predetermined threshold. The predetermined threshold herein is a value such that only the peak portion of a new S-shaped pattern is extracted and no new trash patterns are extracted, like the brightness value b₁₀ in FIG. 7. Such a threshold can be readily determined by using a histogram of a feature image, for example, because only an S-shaped pattern is emphasized in the feature image.

In the first embodiment, the brightness values are added up in the vertical direction of the picture because the vertical and horizontal directions of the picture to which the feature image generating process is applied are consistent with those of the image of an obj ect to be counted. However, the brightness values can be added up in any direction that can emphasize the brightness values in the region occupied by the image of the object, relative to the other brightness values by adding up the brightness values. What is essential is that two pixels be at a predetermined distance (d₁ pixels) from a pixel of interest in the vertical direction of the image of an object to be counted so that an S-shaped pattern can be emphasized.

While a value equal to (dᵥ/2) is used as d₁, d₁ is not limited to that value. For example, a value equal to (dᵥ/4) may be used.

As has been described above, in the image processing apparatus according to the first embodiment of the present invention, the feature image generating unit provided upstream from the binarizing unit applies spatial filtering (the feature image generating process) based on the size of an object to be counted to emphasize the peak (S-shaped peak portion) of the brightness values in the region occupied by the image of the object, thereby making it possible to generate a good binary image in which connected components representing the images of objects that are contained in a picture but are not to be counted (trashes) do not appear. Consequently, the objects to be counted can be counted with high accuracy.

### Second embodiment

An image processing apparatus according to a second embodiment of the present invention will be described. The image processing apparatus in the second embodiment is the same as the image processing apparatus in the first embodiment, except for the spatial filtering (the feature image generating process) performed by the feature image generating unit. Therefore, the feature image generating process in the second embodiment will be described below with reference to FIGS. 9 to 11.

The second embodiment will be described with respect to the image shown in FIG. 2 as the monochrome picture (input picture) inputted from a image input unit to the feature image generating unit, as in the first embodiment. Also as in the first embodiment, it is assumed here that the vertical and horizontal directions of objects to be counted coincide the vertical and horizontal directions of an input picture.

FIG. 9 is a schematic diagram for explaining a feature image generating process according to the second embodiment of the present invention. In the feature image generating process according to the second embodiment, two pixels p₃ (m - d₂, n) and p₄ (m + d₂, n) are set on the left and right of a pixel of interest p (m, n) at a predetermined distance (d₂ pixels) from the pixel of interest in the horizontal direction of the input picture (monochrome picture), the brightness value of pixel p₃ which is in a dark portion of the object to be counted is subtracted from the brightness value of pixel p₄ which is a light portion of the object, and the brightness value of pixel p of interest is replaced with the difference.

The predetermined distance of d₂ pixels is determined according to the size of obj ects to be counted. In this example, it is half of the maximum horizontal width of an object to be counted, that is, (dₕ/2) pixels.

FIG. 10 is a graph showing changes in the brightness in the horizontal direction of a feature image generated through the feature image generation process described with respect to the first embodiment. The horizontal axis represents positions in the feature image in the horizontal direction and the vertical axis represents the brightness values. Curve I₆ represents the brightness values of the pixels on line L₆ (not shown) in the feature image. Line L₆ corresponds line L₄ in the input picture shown in FIG. 2. Curve b₆ represents the background brightness values.

As shown in FIGS. 6 and 10, the S-shaped pattern 11 is not so distinctive from the trash pattern 12 in the input picture (monochrome picture) whereas a new S-shaped pattern 15 is emphasized with respect to a new trash pattern 16. This emphasis is caused as follows. The predetermined distance (d₂ pixels) is equal to half of the maximum width of the image of the object to be counted, that is, (dₕ/2) pixels, and as a result pixel p₃ is included the dark part and p₄ is included in the light part with the pixel of interest being near the center of the S-shaped pattern (near the boundary between the dark and light parts.) Therefore, the new brightness value of the pixel of interest is always increased by subtracting the brightness value of pixel p₃ from that of pixel p₄ whereas the brightness values in the trash pattern are not emphasized by subtraction because changes in the brightness values in the trash patterns are not affected by a distance of d₂ pixels.

FIG. 11 shows a binary image generated by applying thresholding to the feature image with a predetermined threshold. The threshold is set such that only the peak portion of the new S-shaped pattern 15 is extracted and the new trash pattern 16 is not extracted, as the brightness value b₁₁ shown in FIG. 10. Such a threshold can be readily determined from a histogramof the feature image because only an S-shaped pattern is emphasized in the feature image.

In the second embodiment, the brightness value subtraction is performed in the horizontal direction of the picture because the vertical and horizontal directions of the picture to which the feature image generating process is applied are consistent with those of the image of an object to be counted. However, the brightness value subtraction can be performed in any direction that can emphasize the brightness values in the region occupied by the images of the object with respect to the other brightness values by adding up them. What is essential is that two pixels be set at a predetermined distance (d₂ pixels) from a pixel of interest in the horizontal direction of the image of an object to be counted so that an S-shaped pattern can be emphasized.

While a value equal to (dₕ/2) is used as d₂, d₂ is not limited to that value. For example, a value equal to (dₕ/3) may be used.

As has been described above, in the image processing apparatus according to the second embodiment of the present invention, the feature image generating unit provided upstream from the binarizing unit applies spatial filtering (the feature image generating process) based on the size of an object to be counted to emphasize the peak (S-shaped peak portion) of the brightness values in the region occupied by the image of the obj ect, thereby making it possible to generate a good binary image in which connected components representing the images of objects that are contained in a picture but are not to be counted (trashes) do not appear. Consequently, the objects to be counted can be counted with high accuracy.

### Third embodiment

An image processing apparatus according to a third embodiment will be described. The image processing apparatus in the third embodiment is the same as those in the first and second embodiments, except for the spatial filtering (the feature image generating process) performed by the feature image generating unit. The feature image generating process according to the third embodiment will be described below with reference to FIGS. 12 to 17.

The third embodiment will be described by taking an image shown in FIG. 12 as an example of a monochrome picture (input picture) inputted from an image input unit to the feature generating unit. FIG. 12 shows an example of a monochrome picture (input picture) inputted from the image input unit to the feature image generating unit. In FIG. 12, the images 17 and 18 of objects are to be counted. While he object image 17 is originally an ellipse like the object image 18, it is deformed because of a displacement in the horizontal direction of the picture. The object image 17 has a maximum horizontal width of dₕ pixels, a maximum vertical width of dᵥ pixels and has a dark, left-hand part with greater brightness values and a light, right-hand part with smaller brightness values, as shown in FIGS. 3 and 4. As in the first and second embodiments, the vertical and horizontal directions of the images of the objects to be counted coincide with the vertical and horizontal directions of the input picture.

FIG. 13 is a schematic diagram illustrating a feature image generating process according to the third embodiment. In the feature image generating process according to the third embodiment, a first pixel p₅ (m - d₃, n) and a second pixel p₆ (m + d₃, n) are set on the left and right of a pixel of interest p (m, n) at a first predetermined distance (d₃ pixels) from the pixel p of interest as shown in FIG. 13, a pixel p₇ (m - d₃ - Δd, n) and a pixel p₈ (m - d₃ + Δd, n) are set on both sides of the first pixel p₅ at a second predetermined distance (Δd) from the first pixel p₅ in horizontal direction of the input picture, a pixel p₉ (m + d₃ - Δd, n) and a pixel p₁₀ (m + d₃ + Δd, n) are set on both sides of the second pixel p₆ at a second predetermined distance from the second pixel p₆, the pixel q₁ that has the lowest brightness value among the pixels between pixel p₇ and pixel p₈ (in a bottom search area (sub area) 19) in the dark part of the image of the object to be counted is selected, the pixel q₂ that has the highest brightness value among the pixels between pixel p₉ and pixel p₁₀ (in a peak search area (sub area) 20) in the light part of the image of the object is selected, the brightness value of pixel q₁ is subtracted from the brightness value of pixel q₂, and the brightness value of the pixel of interest p is replaced with the difference. This process is performed on all images in the picture.

The first predetermined distance of d₃ pixels is determined on the basis of the size of the image of the object to be counted. In this example, it is half or the maximum horizontal width of the image of the obj ect to be counted, that is, (dₕ/2) pixels. Further, Δd is a infinitesimal value related to the degree of a horizontal displacement and is one tenth of the maximum horizontal width of the image of the object to be counted, that is, (dₕ/10).

FIG. 14 is a graph showing changes in the brightness in the horizontal direction of the input picture shown in FIG. 12. The horizontal axis represents positions in the horizontal direction of the input picture and the vertical axis represents the brightness values. Curves I₇ and I₈ represent the brightness values of the pixels on lines L₇ and L₈, respectively, shown in FIG. 12. Curve b₇ represents the background brightness values.

FIG. 15 is a graph showing changes in the brightness in the horizontal direction of a feature image generated through the feature image generating process described above. The horizontal axis represents positions in the horizontal direction of the feature image and the vertical axis represents the brightness values. Curves I₉ and I₁₀ represent the brightness values of the pixels on lines L₉ and L₁₀ (not shown) in the feature image. Lines L₉ and L₁₀ correspond to lines L₇ and L₈, respectively, shown in FIG. 12, and b₃ represents the background brightness values.

Comparing FIG. 14 with FIG. 15, new S-shaped patterns are emphasized with respect to new trash patterns in the feature image, as in the patterns described with respect to the second embodiment and shown in FIGS. 6 and 10. Further, the overlap of the peak of curve I₉ with the peak of I₁₀ shown in FIG. 15 is greater than the overlap of the peak of curve I₇ with the peak of I₈. This is because the differences (brightness values) calculated while the peaks and bottoms of the S-shaped patterns are in a peak search area and bottom search area having a given becomes new peaks.

FIG. 16 shows a binary image generated by applying threshold to the input picture shown in FIG. 12 with a threshold b₁₂ shown in FIG. 14. Because the peak of curve I₇ does not coincide with the peak of curve I₈ as shown in FIG. 14, such the threshold causes connected components comprised of white pixels that correspond to the peaks of curves I₇ and I₈ to appear. As a result, more than one connected component comprised of white pixels appear as the object 17 shown in FIG. 12 and would be counted as separate objects, thus degrading the accuracy of counting. Therefore, a binary image like this is inappropriate for counting operation.

FIG. 17 shows a binary image generated by applying thresholding to the feature in such a manner that only the new peaks are extracted. Because only one connected component comprised of white pixels appears in the binary image shown in FIG. 17 as the object 17 shown in FIG. 12, accurate counting can be performed. The threshold used in the thresholding is less than or equal to the brightness values in the area where the new peaks overlap with each and is a value such that only the new peaks are extracted, as indicated by b₁₃ in FIG. 15. Only one connected component comprised of white pixels appears for the object image 17 shown in FIG. 12, because the overlap of the peaks of curves I₉ and I₁₀ in the feature image is large and therefore the maximum value of the brightness in this overlapping area is large. The threshold can be readily determined from a histogram of the feature image because only S-shaped patterns are emphasized in the feature image.

The brightness value subtraction is performed in the horizontal direction of the picture because the vertical and horizontal directions of the picture to which the feature image generating process is applied are consistent with those of the image of an object to be counted. However, the brightness value subtraction can be performed in any direction that increase the width of the peaks of the brightness values in the area occupied by an object to be counted. What is essential is that a bottom search area and a peak search area are provided with their center at two points at a first predetermined distance (d₃ pixels) from a pixel of interest in the horizontal direction of the image of the object to be counted so that the width of the peaks of S-shaped patterns can be increased.

While a value equal to (dₕ/2) is used as d₃, d₃ is not limited to that value. For example, a value equal to (dₕ/3) may be used.

While a value equal to dₕ/10 is used as Δd, Δd may be any value that does not exceed dₕ/2.

As has been described above, in the image processing apparatus according to the third embodiment of the present invention, the feature image generating unit provided upstream from the binarizing unit applies spatial filtering (the feature image generating process) based on the size of an object to be counted to increase the width of the peak (S-shaped peak portion) of the brightness values in the area occupied by the image of the object, thereby allowing a good binary image to be generated. Consequently, the objects to be counted can be counted with high accuracy.

Various combinations of feature image generating processes described with respect to the first to third embodiments may be used for spatial filtering. For example, a feature image generated by the feature image generating process described with respect to the first or second embodiment may be used as an input picture in the feature image generating process described with respect to the third embodiment.

### Fourth embodiment

An image processing apparatus according to a fourth embodiment of the present invention will be described. The image processing apparatus according to the fourth embodiment is the first embodiment, except for labeling by the labeling unit. A labeling process in the fourth embodiment will be described below with reference to FIGS. 18 to 22.

FIG. 18 is a flowchart illustrating a labeling process according to the fourth embodiment.

First, the labeling unit initializes the number N to 0 and also initializes the coordinates of a pixel p of interest to (1, 1) at step S101. The coordinates (1, 1) is the coordinates of the top left corner of the picture, and coordinates are defined in the order from left to right and from top to bottom as shown in FIG. 19.

Then, the labeling unit determines at step S102 whether or not the pixel p of interest is a white pixel. If the determination is positive, that is, the pixel p of interest is a white pixel, then the process proceeds to step S103. Otherwise, that is, if the pixel p of interest is a black one, the process proceeds to step S108.

At step S103, the labeling unit determines whether or not the pixel p of interest is already labeled with a number. If the determination is positive, that is, if the pixel p of interest is unlabeled, the process proceeds to step S104. Otherwise, that is, if the pixel p of interest is already labeled, then the process proceeds to step S108.

At step S104, the labeling unit increments the number N by 1.

At step S105, the labeling unit labels the pixel p of interest with number N.

At step S106, the labeling unit sets, with respect to the pixel p of interest, a search range R based on the size of the image of the object to be counted. It is preferable that the search range R be set so that the image of the object to be counted is encompassed by the range or at least the image of the object is inscribed in the search range, assuming that the pixel p of interest is in the area occupied by the image of the object.

At step S107, the labeling unit searches the search range R set at step S106 for connected components of the pixel p of interest and labels all connected components found with number N. After the search is performed for all pixels in the search range R, the process proceeds to step S108.

At step S108, the labeling unit determines whether the pixel p of interest is the last pixel, that is, whether the entire area of the picture has been examined. If the determination is positive, the labeling unit assumes that the labeling in the entire area of the picture has been completed and the labeling process will end. On the other hand, if the determination is negative, the process proceeds to step S109.

At step S109, the labeling unit sets as the pixel p of interest the next pixel in the scanning direction defined in FIG. 19 and returns to step S102 to continue the labeling process.

A labeling process according to the fourth embodiment will be described with respect to an example in which the monochrome picture shown in FIG. 20 is inputted from the image input unit to the feature image generating unit.

As shown in FIG. 20, the images 21 and 22 of objects to be counted included in the monochrome picture are close to each other. Therefore, white pixels representing two objects to be counted appear as one connected component in the binary image as shown in FIG. 21.

A labeling process applied on the binary image shown in FIG. 21 will be described below with respect to the flowchart shown in FIG. 18.

FIG. 22 (a) shows image data of the binary image shown in FIG. 21, in which shaded cells represent black pixels, which are cells with the value 0 and white cells represents white pixels, which are cells with the value 1.

When a binary image having the image data shown in FIG. 22 (a) is inputted, the labeling unit initializes the number N to 0 and also initializes the coordinates of a pixel p of interest to (1, 1), then starts labeling (step S101). Then, the pixel p at the coordinates (4, 3) is reached and positive determination at both of steps S102 and S103 result, then steps S104, S105, S106, and S107 are performed.

FIG. 22 (b) shows the result of the labeling performed in the limited search range R when the pixel p is at the coordinates (4, 3). As shown in FIG. 22 (b), the pixels in the connected component the pixel p of interest that are included in the search range R are labeled an identical number, 1, whereas the pixels of the connected component that are not included in the search range R are not labeled with the umber (label) because they are not searched.

Then, the process proceeds to step S108 to S109, where the next pixel at (5, 3) is set as the pixel p of interest, then the process returns to step S102. When the pixel p at (4, 7) is reached, positive determination at both of steps S102 and S103 results. Then, steps S104, S105, S106, and S107 are performed.

When the process shown in FIG. 18 ends, the pixels of the connected component that were not labeled with the number (label) at state shown in FIG. 22 (b) have been labeled with a different number (label) as shown in FIG. 22 (c). Therefore, the two objects to be counted can be correctly counted.

According to the fourth embodiment, even if white pixels in a binary image are connected because a number of objects to be counted are close to each other, the object can be counted correctly because the search range for labeling is limited according to the size of the image of the object to be counted.

The labeling unit (labeling process) in the fourth embodiment can be applied to any of the image processing apparatuses of the first to third embodiments.

### Fifth embodiment

An image processing apparatus according to a fifth embodiment will be described. The image processing apparatus according to the fifth embodiment differs from the first embodiment in that an area extracting unit is provided upstream of a feature image generating unit. The remaining components and processing are the same as those of the first embodiment. The area extracting unit in the fifth embodiment will be described with reference to FIGS. 23 to 25.

FIG. 23 is a block diagram showing a configuration of the image processing apparatus according to the fifth embodiment. The area extracting unit 23 in FIG. 23 extracts an area including the image of an object to be counted from a monochrome picture inputted from an image input unit 1 and provides the image (partial image) of the area to a feature generating unit 2.

A process for obtaining a range (image processing range) to be extracting will be described below with reference to FIGS. 24 and 25. FIG. 24 is a flowchart of the process for obtaining an image processing range according to the fifth embodiment.

At step S201, the area extracting unit 23 initializes the coordinates of a pixel p of interest to (1,1). The initial coordinates (1, 1) are the coordinates the top left corner and the scanning direction is defined so that picture is scanned from left to right and from top to bottom as in the fourth embodiment (see FIG. 19).

Then, at step S202, the area extracting unit 23 determines whether the pixel p of interest is a no-background pixel. This determined by calculating the difference between the brightness value of the pixel p of interest and the brightness of the background and determines whether the absolute value of the difference is greater than or equal to a predetermined value. The brightness value of the background is predetermined by, for example, assuming the value that most frequently appears on the brightness histogram of the image as the brightness of the background. The predetermined value used for the determination is a value slightly greater than the range of variations in the brightness value of the background, which is predetermined by a brightness histogram, for example. If the determination at step S202 is positive, that is, the absolute value of the difference between the brightness of the pixel p of interest and the brightness value of the background is greater than or equal to the predetermined value, the pixel p of interest is a non-background pixel, and therefore it can be estimated that there is an object to be counted or an object of another type near the pixel p of interest. Then, the process proceeds to step S203. On the other hand, if the determination is negative, that is, the absolute value of the difference between the brightness value of the pixel p of interest and the background brightness value is smaller than the predetermined value, it can be estimated that the pixel p of interest is a background component. In that case, the process proceeds to step S207.

At step S203, the area extracting unit 23 determines whether the pixel p of interest is out of an image processing area that is already set for another pixel. If the determination is positive, that is, the pixel p of interest does not belong to any image processing range already set for another pixel, the process proceeds to step S204. On the other hand, if the determination is negative, that is, the pixel p of interest belongs to an image processing range set for another pixel, the process proceeds to step S207.

At step S204, the area extracting unit 23 sets an image processing range T based on the size of the image of the object to be counted, with respect to the position of the pixel p of interest. Assuming that the current pixel p of interest constitute an object to be counted, it is preferable that the image processing range T has the size such that the image of the object to be counted is encompassed by the image processing range T or at least the image of the object to be counted is inscribed in the image processing range T.

At step S205, the area extracting unit 23 determines whether or not the image processing range T set at step S204 is overlapping at least a portion of any image processing range already set for another image processing range. If the determination is positive, that is, the image processing range T is overlapping at least a portion of an image processing range set for another pixel, the process proceeds to step S206. On the other hand, if the determination is negative, that is the image processing range T does not overlap any image processing range set for another pixel, the process proceeds to step S207.

At step S206, the area extracting unit 23 sums the overlapping image processing ranges to combine them and replaces them with a single image processing range that encompasses the overlapping image processing ranges. For example, if the image processing range T set at step S205 is overlapping an image processing range U already set for another pixel as shown in FIG. 25(a), the area extracting unit 23 sums the image processing ranges to generate an image processing range V and replaces the image processing range T with the image processing range V. Then, the process proceeds to step S207.

At step 5207, the area extracting unit 23 determines whether the pixel p of interest is the last pixel in the picture, that is, whether the entire picture has been examined. If the determination is positive, it is considered that the entire area of the picture has been processed and the process will end. On the other hand, if the determination is negative, the process proceeds to step S208.

At step S208, the area extracting unit 23 sets as the pixel p of interest the next pixel in the scanning direction defined in FIG. 19 and returns to step S202 to continue the labeling process.

By determining an image processing range as describe above, the processes performed by the feature image generating unit, the binarizing unit, and the labeling unit are performed in a limited sub image around the image of an object to be counted but not on the other images containing only background components. Consequently, the time required for such processes can be significantly reduced. Especially if objects to be counted are sparsely distributed throughout the picture and background components occupy most part of the picture, the processing time can be significantly reduced.

The area extracting unit in the fifth embodiment can be applied to any of the image processing apparatuses of the first to fourth embodiments.

According to the present invention, spatial filtering for emphasizing a peak portion (S-shaped pattern) of the brightness value in a region occupied by the image of an object to be counted is performed according to the size of the image of the object to be counted, as has been described above. Thus, even if a monochrome picture contains objects (trashes) that should not be counted, a binary image in which the connected components representing the trashes do not appear can be generated and consequently the objects to be counted can be counted accurately.

Furthermore, because spatial filtering is applied to a monochrome picture to cause the peak portions of brightness values appearing in the region occupied by the image of an object to be counted to overlap each other according to the size of the image of the object, a binary image in which the image of one object appears as one connected component can be generated even if there is a horizontal displacement in the monochrome picture, and consequently the object to be counted can be counted accurately.

Moreover, because a search range for labeling is limited according to the size of the image of an object to be counted, an identical label can be assigned only to the pixels in the portion of the component that is included in the search range limited according to the size of the object to be counted and consequently the object to be counted can be counted accurately.

Furthermore, because the area extracting unit is provided downstream of the image input unit for extracting an area containing a non-background object (an area containing the image of an object to be counted) from a monochrome picture to generate a sub image and the sub image of the monochrome picture is used in the feature image generating process, binarizing process, and labeling process, the time required for these processes can be reduced.

## Claims

1. An image processing apparatus comprising:
an image input unit for inputting a monochrome picture containing at least one image of an object to be counted, the image having a predetermined size and comprising a light portion and a dark portion;
a feature image generating unit for generating a feature image in which a brightness value of the image of the object to be counted is emphasized by applying spatial filtering based on the size of the image of the object to be counted to the monochrome picture; and
a binary image generating unit for generating a binary image by applying thresholding to the feature image by using a predetermined threshold,
wherein labeling is applied to the binary image to assign an identical label to the elements of a connected component representing the image of the object to be counted and the images of the objects to be counted are counted.

2. The image processing apparatus according to claim 1, wherein the feature image generating unit performs spatial filtering in which brightness values of all pixels on a line segment between end points which are two pixels located below and above a pixel of interest at a predetermined distance from the pixel of interest in the vertical direction of the image of the object to be counted are added up and the brightness value of the pixel of interest is replaced with the sum, the predetermined distance being determined based on the size of the image of the object to be counted.

3. The image processing apparatus according to claim 2, wherein the predetermined distance is equal to one half of the maximum vertical width of the image of the object to be counted.

4. The image processing apparatus according to claim 2, wherein the predetermined distance is equal to one quarter of the vertical width of the image of the object to be counted.

5. The image processing apparatus according to claim 1, wherein the feature image generating unit reads brightness values of two pixels located at a predetermined distance from the pixel of interest, in the opposite horizontal directions of the image of the object to be counted, subtracts the brightness value of one of the pixels that is in the dark portion of the image of the object to be counted from the brightness value of the other pixel that is in the light portion of the image of the object to be counted and, replaces the brightness value of the pixel of interest with the difference, the predetermined distance being determined based on the size of the object to be counted.

6. The image processing apparatus according to claim 5, wherein the predetermined distance is equal to one half of the maximum horizontal width of the image of the object to be counted.

7. The image processing apparatus according to claim 5, wherein the predetermined distance is equal to one-third of the maximum horizontal width of the image of the object to be counted.

8. An image processing apparatus comprising:
an image input unit for inputting a monochrome picture containing at least one image of an object to be counted, the image having a predetermined size and comprising a light portion and a dark portion;
a feature image generating unit for generating a feature image in which width of a peak portion of a brightness value of the image of the object to be counted is increased by applying, to the monochrome picture, spatial filtering based on the size of the image of the object to be counted; and
a binary image generating unit for generating a binary image by applying thresholding to the feature image by using a predetermined threshold,
wherein labeling is applied to the binary image to assign an identical label to the elements of a connected component representing the image of the object to be counted, and the images of the objects to be counted are counted.

9. The image processing apparatus according to claim 8, wherein the feature image generating unit sets, as first and second pixels, two pixels located at a first distance from the pixel of interest, in opposite horizontal directions of the object to be counted, sets a first sub area centered at the first pixel and a second sub area centered on the second pixel, subtracts a brightness value of the pixel that has a lowest brightness value among the pixels in the sub area in the dark portion of the image of the object to be counted, from a brightness value of the pixel that has a highest brightness value among the pixels in the sub area in the light portion, and replaces the brightness value of the pixel of interest with the difference.

10. The image processing apparatus according to claim 9, wherein the first sub area comprises pixels on a line segment between two pixels located at a second predetermined distance from the first pixel, in the opposite horizontal directions of the image of the object to be counted, and the second sub area comprises pixels on a line segment between two pixels located at a second predetermined distance from the second pixel, in the opposite horizontal directions of the image of the object to be counted.

11. The image processing apparatus according to claim 9, wherein the first predetermined distance is equal to one half of the maximum horizontal width of the image of the object to be counted.

12. The image processing apparatus according to claim 10, wherein the first predetermined distance is equal to one half of the maximum horizontal width of the image of the object to be counted.

13. The image processing apparatus according to claim 9, wherein the first predetermined distance is equal to one-third of the maximum horizontal width of the image of the object to be counted.

14. The image processing apparatus according to claim 10, wherein the first predetermined distance is equal to one-third of the maximum horizontal width of the image of the object to be counted.

15. The image processing apparatus according to claim 10, wherein the second predetermined distance is equal to one-tenth of the maximum horizontal width of the image of the object to be counted.

16. The image processing apparatus according to claim 11, wherein the second predetermined distance is equal to one-tenth of the maximum horizontal width of the image of the object to be counted.

17. The image processing apparatus according to claim 12, wherein the second predetermined distance is equal to one-tenth of the maximum horizontal width of the image of the object to be counted.

18. The image processing apparatus according to claim 13, wherein the second predetermined distance is equal to one-tenth of the maximum horizontal width of the image of the object to be counted.

19. The image processing apparatus according to claim 14, wherein the second predetermined distance is equal to one-tenth of the maximum horizontal width of the image of the object to be counted.

20. The image processing apparatus according to any of claims 1 to 19, wherein the binary image is searched for a connected component representing the image of the object to be counted, in a limited search range based on the size of the image of the object to be counted, and labeling is applied to the limited search range to assign an identical label to the elements of the connected component.

21. The image processing apparatus according to claim 20, wherein the limited search range is of a size such that at least the image of the object to be counted is inscribed in the limited search range.

22. The image processing apparatus according to any of claims 1 to 19, wherein an area extracting unit is provided downstream of the image input unit in order for extracting an image of an area containing the image of the object to be counted from the monochrome picture to generate a sub image, and the feature image generating unit applies the spatial filtering to the sub image.

23. The image processing apparatus according to claim 22, wherein the area extracting unit determines whether a pixel of interest is in an image processing range set for another pixel if an absolute value of the difference between the brightness value of the pixel of interest and the brightness value of the background is greater than a predetermined value, and if the pixel of interest is not in the image processing range set for another pixel, the area extracting unit sets an image processing range based on the pixel of interest and extracts an area image of the set image processing range.

24. The image processing apparatus according to claim 23, wherein if the image processing range set for the pixel of interest overlaps a part or all of the image processing range set for another pixel, the area extracting unit replaces the image processing ranges with one image processing range encompassing the image processing ranges in their entirety, and extracts an area image of the replacement image processing range.

25. The image processing apparatus according to claim 24, wherein the replacement image processing range contains the pixel of interest, and is of a size such that at least the image of the object to be counted is inscribed therein.

26. The image processing apparatus according to claim 24, wherein the binary image is searched for a connected component representing the image of the object to be counted, in a limited search range based on the size of the image of the object to be counted, and labeling is applied to the limited search range to assign an identical label to the elements of the connected component.

27. The image processing apparatus according to claim 26, wherein the limited search range is of a size such that at least the image of the object to be counted is inscribed in the limited search range.
